Europäisches Patentamt

European Patent Office

Office européen des brevets

(11) Publication number: **0 218 036**
A1

## (12) EUROPEAN PATENT APPLICATION

(21) Application number: **86110862.9**

(22) Date of filing: **06.08.86**

(51) Int. Cl.⁴: **G 05 B 19/403**

(30) Priority: **10.08.85 GB 8520123**

(43) Date of publication of application: **15.04.87**
Bulletin 87/16

(84) Designated Contracting States: **AT BE CH DE FR GB IT LI LU NL SE**

(71) Applicant: **Target Industries Limited, Witches Mill Arbory Road, Castletown Isle of Man (GB)**

(72) Inventor: **Wood, John, Witches Mill Arbory Road, Castletown Isle of Man (GB)**

(74) Representative: **Denmark, James, c/o Bailey Walsh & Co. 5 York Place, Leeds LS1 2SD Yorkshire (GB)**

(54) Improvements relating to control circuits, especially for servo systems.

(57) The invention provides a control circuit which is suitable for multi-channel application in low to medium frequency response range. The circuit includes a signalling system which employs multiplexing and impedance matching to allow both the electrical power for the servo drives and the control information to be passed down a minimum of two electrical wires. The circuit uses 6 or 8 channels depending upon whether 2 of the channels are used for servo position drift annulling.

Improvements Relating to Control Circuits, especially for Servo Systems.

This invention relates to control circuits, especially but not exclusively control circuits for servo systems, and further especially but not exclusively for servo systems comprising servo motors arranged for the automatic positioning of a cutting apparatus of the type which is for use under ground in underground pipelines and passageways, and the operation of which is controlled from a remote location, for example in a control vehicle located above ground.

Because the invention was designed and made for use in connection with a cutting apparatus as above described, reference will be made hereinafter mainly to a control circuit for the servo controlling of such a cutting apparatus, but it is to be mentioned that the control circuit can be used in a wide range of applications especially those involving multi-channel remote servo control.

The cutting apparatus for which the invention was made comprises a cutting apparatus for positioning inside an underground pipeline or passageway and comprises an elongated body at the end of which is a cutting bit. The cutting bit has the function of cutting holes in lining material in the pipeline in order to re-establish connection between the pipeline and intersecting pipelines, which intersections have previously been covered by the operation of lining the pipeline or passageway with a tubular liner. There are known a number of processes for the lining of a pipeline or passageway and all of which require the cutting of the lining at said intersections.

The cutter bit must be able to move in as universal a

2

fashion as possible in order to follow the line of the intersection, and also to penetrate through the lining, and furthermore to enable the cutter bit to cut the lining at any of a plurality of intersections which may be angularly offset with respect to each other. The cutter bit therefore has to have a number of degrees of movement to achieve this universal freedom and in such cutting apparatus a servo motor may be used for each degree of movement. There may be four or more such servo motors for the positioning of the cutter bit and if the servo motors are reliably to position the cutter bit in accordance with controls from a remote location, then each servo motor must be controlled in accordance with information from the remote location. The present invention provides means for effecting this control in an accurate and yet simplified fashion.

Each servo motor or other device controlled by the circuit is referred to herein as a channel and therefore the control circuit may be considered as addressing a multi-channel positioning device.

In the preferred arrangement wherein a cutting apparatus of a multi-servo channel arrangement is controlled, it is preferred that a master unit at the control location be provided, the master unit providing position signals for addressing the respective channels. The master unit may for example comprise a movable member moved automatically or by hand along a path corresponding to the liner cut which is to be made inside the passageway by the cutting apparatus and as the control member is moved, and a series of position signals are generated which respectively are addressed to the servo motors of the cutting apparatus so the cutter bit will accurately follow the correct path effecting the accurate cutting of the lining tube.

With such an arrangement, it would normally be required that a plurality of address wires would be required for the respective channels, but this will in fact mean that large expense would be required to provide these connecting wires where the control input is located remotely i.e. of the order of hundreds of metres, from the cutting apparatus, and the present invention provides a control device whereby the control signals may be passed to the cutting apparatus along a minimum of connecting wires or lines. Indeed, the connecting lines or wires although electrical in nature in the preferred example, could be in the form of an alternative data link which is optical, fibre-optical, pneumatic, sonic, ultrasonic, or radial in nature, and this should be borne in mind even although the data link is referred to hereinafter generally as supply lines in general, and electrical lines in the specific.

According to the present invention there is provided a control circuit, for example for a multi-channel servo system, comprising:

a) input means providing a plurality of pulse width modulated (PWM) input signals;

b) input conversion means converting the leading and trailing edges of the PWM signals into voltage glitches;

c) power supply lines along which the voltage glitches are passed;

d) output means receiving said glitches; and

e) output conversion means converting said glitches into PWM output signals, which signals can be used to drive for example respective motors of a servo system.

Preferably, the supply lines comprise three lines carrying a positive voltage, zero voltage and a negative voltage, said glitches being supplied on the positive or negative lines and being voltage spikes lowering the positive voltage or raising the negative voltage.

Preferably also the input means comprises respective potentiometers providing input analogue signals corresponding to the potentiometer positions, an input multiplexer for providing said input analogue signals cyclically at the output of said multiplexer, which output is connected to said input conversion means.

According to another preferred feature, the output means comprises a de-multiplexer connected to the output of the output conversion means recreating input PWM signals which may be applied for example to servo motors, and in yet a further preferred feature servo motors are provided and are adapted to be driven by said recreated input signals, the circuit including output or position potentiometers connected to said servo motors providing analogue feedback signals and comparitor means comparing the recreated signals with the feedback signals to provide error signals which are used accurately to position the servo motors.

An embodiment of the present invention will now be described, by way of example, with reference to the accompanying diagrammatic drawings, wherein:-

Fig. 1 is a perspective view illustrating cutting apparatus and master control apparatus which are coupled by a control circuit according to the embodiment of the invention;

Fig. 2 illustrates cutting apparatus of Fig. 1 and several degrees of possible movement thereof;

Fig. 3 is a plan view of the cutter apparatus of Fig. 1 illustrating a further degree of movement thereof;

Fig. 4 is an end view of the cutter apparatus of Fig. 1 showing yet a further degree of movement of the cutter apparatus;

Fig. 5 is a circuit diagram illustrating the master unit input potentiometers and the cutter apparatus feedback potentiometers;

Fig. 6 is a general circuit diagram of the control circuit according to the embodiment of the invention;

Fig. 7 is a diagram showing the nature of the wave form of the signals supplied between the transmitter and receiver of the circuit of Fig. 6;

Fig. 8 is circuit diagram of the transmitter of Fig. 6;

Fig. 8A is a detail of the transmitter circuit shown in Fig. 8;

Fig. 9 shows the pulse width modulating wave form of the transmitted signal;

Fig. 10 is a circuit diagram of the receiver of the control circuit;

Fig. 11 illustrates how the supply lines are used to derive a number of voltage levels;

Fig. 12 is a circuit showing how the positive voltage level is rectified;

Fig. 13 is a circuit diagram showing how twenty five volt level and a fifteen volt level are established;

Fig. 14 shows how the minus twenty five volt and minus fifteen volt levels are established;

Fig. 15 illustrates pulse width modulated demand and feedback signals and the resulting error pulse signals;

Fig. 16 illustrates error signals of one channel and the resulting stretched error pulse signals for that channel.

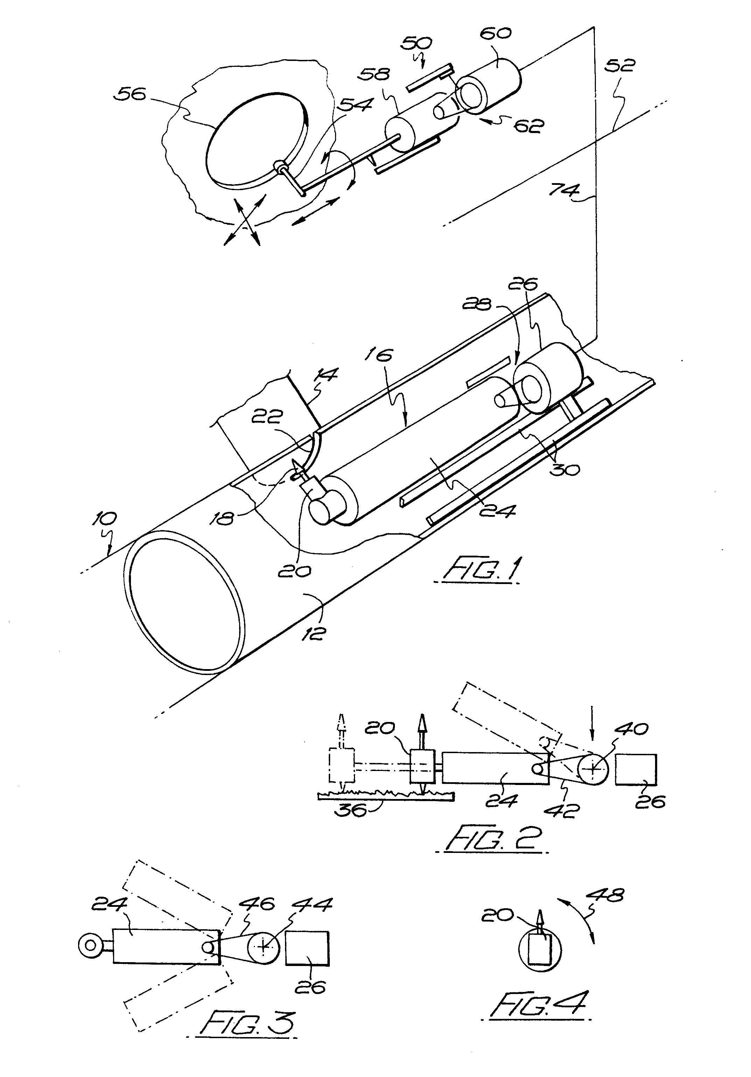

Referring to the drawings, and firstly to Figs. 1 to 4, an underground passageway 10 is shown as being lined with a rigid lining tube 12. A lateral passageway 14 meets the passageway 10 as shown, and the lining tube 12 extends over the opening of the lateral passageway 14 into the main passageway 10. Inside the rigid lining tube 12 is a cutter apparatus 16 having a cutter bit 18 adapted to be rotated at high speed by an electric or other motor 20 in the cutting head. A cutter bit 18 is shown as having been moved along a path defined by the slot 22 in the action of cutting a portion of the lining tube 12 away from the remainder of the lining tube in order to re-establish the connection between the lateral passageway 14 and the main passageway 10. To enable the cutter bit 18 to so move along the path or slot 22 and to continue its movement, the cutter head 20 must have a number of degrees of movement and to this end the cutting apparatus comprises a boom body 24 connected to an anchoring body 26 by means of a universal joint at the location indicated by reference 28. The universal joint has two axes of pivoting arranged at right angles to each other and the axis of passageway 10 so that the boom portion 24 can swing in any direction. The anchoring portion 26 is provided with skids 30 which maintain the cutting apparatus in rigidily fixed position inside the main passageway 10 during cutting operation. The cutting head 20 is also adapted to be moved axially of the boom portion 24, and finally the cutting head assembly 20 is adapted to be rotated about the axis of the boom assembly 24. The cutting head 20 therefore has at least 4 degrees of movement defined by the two pivot axes of the universal joint 28, the linear movement of the cutting head 20 relative to the boom 24, and the rotational movement of the cutting head 20 about the axis of the boom 24.

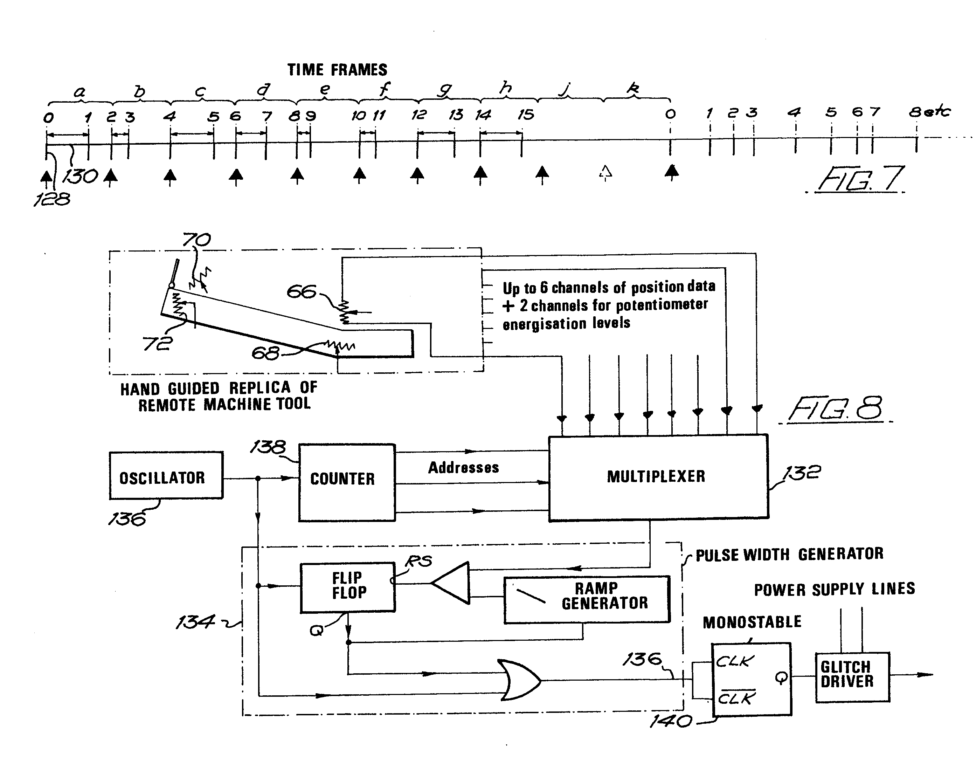

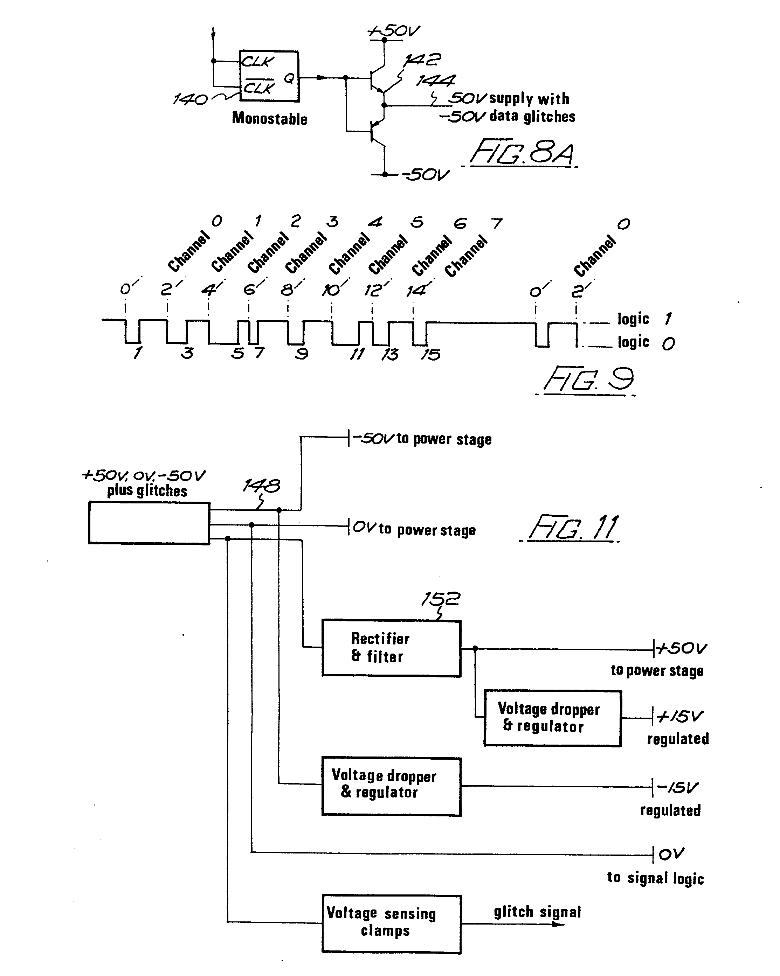

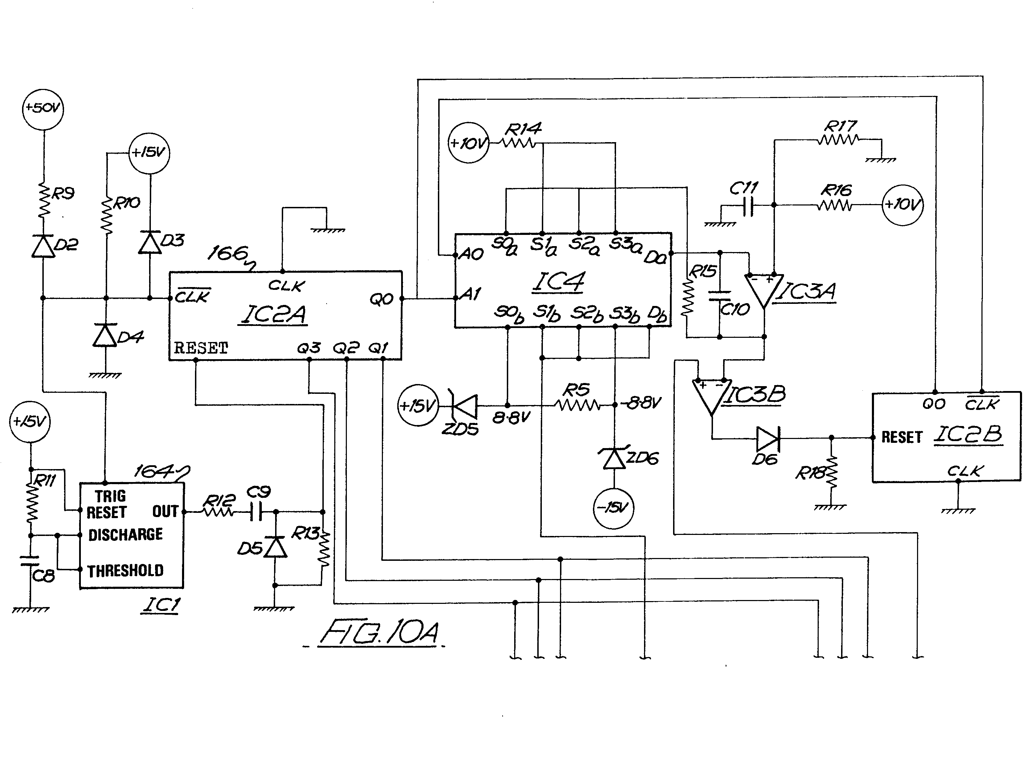

These degrees of movement are effected by means of several motors not shown in Fig. 1 and the position of the cutting head in these respective degrees of movement relative to a fixed datum are monitored by means of four potentiometers 32, 34, 36 and 38 as shown in Fig. 5 whose pointers provide feedback signals indicative of the actual position of the cutting head in relation to datums of these respective degrees of movement.

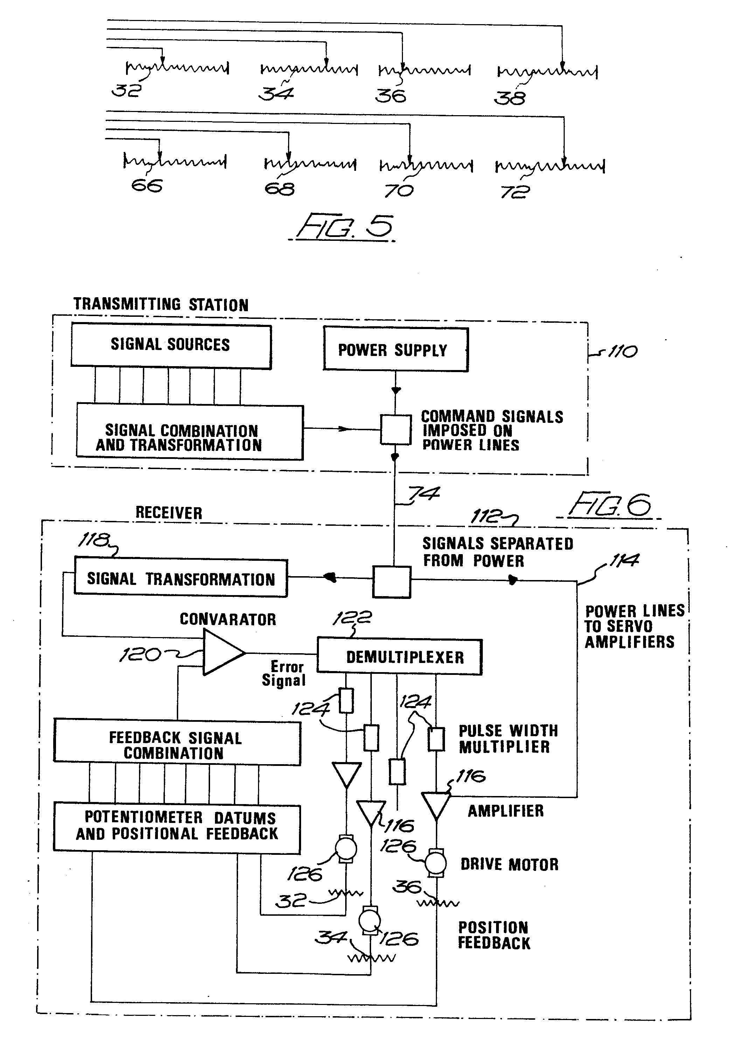

Fig. 2 illustrates the cutting apparatus of Fig. 1 when viewed in a direction along one of the axis of the universal joint 28. The said axis is indicated by reference numeral 40, and it can be seen from the dotted line indications that the boom portion 24 swings about the axis 40 and in so swinging about the axis drives a transmission belt or the like 42 which alters the position of the pointer of the potentiometer 32. Also shown in Fig. 2 in dotted lines is the capability of the linear movement of the cutting head 20 and its relationship with potentiometer 36.

Fig. 3 is a view of the cutter at right angles to the position shown in Fig. 2, in order to indicate the other axis 44 of the universal joint, and also to indicate the capability of boom portion 24 to swing about the axis 44. Again a drive belt 46 is used to drive potentiometer 34.

Fig. 4 is an end view of the cutting apparatus shown in Fig. 1, and viewed on the end carrying the cutting head 20. The arrow 48 indicates how the cutting head 20 can be rotated and the movement of the cutting head in this fashion is monitored by the potentiometer 38.

It can be seen therefore that the positions of the pointers of the potentiometers 32 to 38 keep a constant monitor upon the position of the cutting head 20 and hence the cutting bit 18 in relation to respective data positions.

The movement of the cutter boom 24 is controlled by a master unit 50 located remotely of the cutter unit e.g. above the ground level 52, the cutter 16 being located in an underground passageway.

The master unit 50 comprises in this instance a manually operable stylus 54 which is caused to travel around a template aperture 56 corresponding to the aperture to be cut along the slot line 22. The stylus 54 has the same degrees of movement as the boom 24 and to this end the master unit 50 comprises a master boom portion 58 and an anchoring portion 60, which may be bolted to a framework or the like, and the master boom portion 58 is connected to the anchoring portion 60 by means of a universal joint 62 which is similar in nature to a universal joint 28, and again the master unit 28 is associated with four potentiometers 66, 68, 70 and 72. Movement of the stylus 54 around the template aperture 56 effects changes in the position of the pointers of the potentiometers 66 to 72 and the voltages supplied by the pointers 66 to 72 are used in accordanc with the embodiments of the invention, for the driving of the servo motors in the cutter unit 16 so that the movement of the cutting bit 18 will be a faithful reproduction of the movement of the stylus 54. Appropriate signals between the master unit 50 and the cutter unit 16 are transmitted via a connecting cable means 74 which, because of the construction of the control circuit may be of long length without imparing the efficiency of the transmission signals.

The arrangement described in relation to Fig. 1 can therefore be considered to involve a transmitter associated with the master unit 50, and a receiver associated with the cutter or slave unit 16.

Although in the arrangement described in relation to Figs. 1 to 5, 4 degrees of freedom of the cutter head 20 have been described, and the apparatus may therefore be considered to be a four channel servo system, in fact the number of channels can be varied and the control circuit which is now to be described is described in relation to a circuit having eight channels.

The control circuit which is used for the arrangement of Fig. 1 is particularly suitable for multi-channel servo applications in the low to medium frequency response range. A particular feature of the circuit is the use of a signal system which employs multiplexing and impedance matching techniques to allow both the electrical power for the servo drives and the control information to be passed down a minimum of two electric wires embodied in cable 74. This makes the circuit well suited to the specific application described where there is of necessity a large separation between the master unit 50 and the cutting apparatus 16. In the particular circuit to be described, a three wire coupling cable 74 is used because of the form of drive electronics employed.

In the circuit to be described, an eight channel servo system is described, six of the channels being for driving servo motors such as the motors effecting the

10

degrees of movement described herein and two other degrees of movement, and the other two channels being utilised for the purposes of servo position drift annulment.

The circuit to be described is amenable to extensions of the number of channels, the frequency response and power of the servo drives.

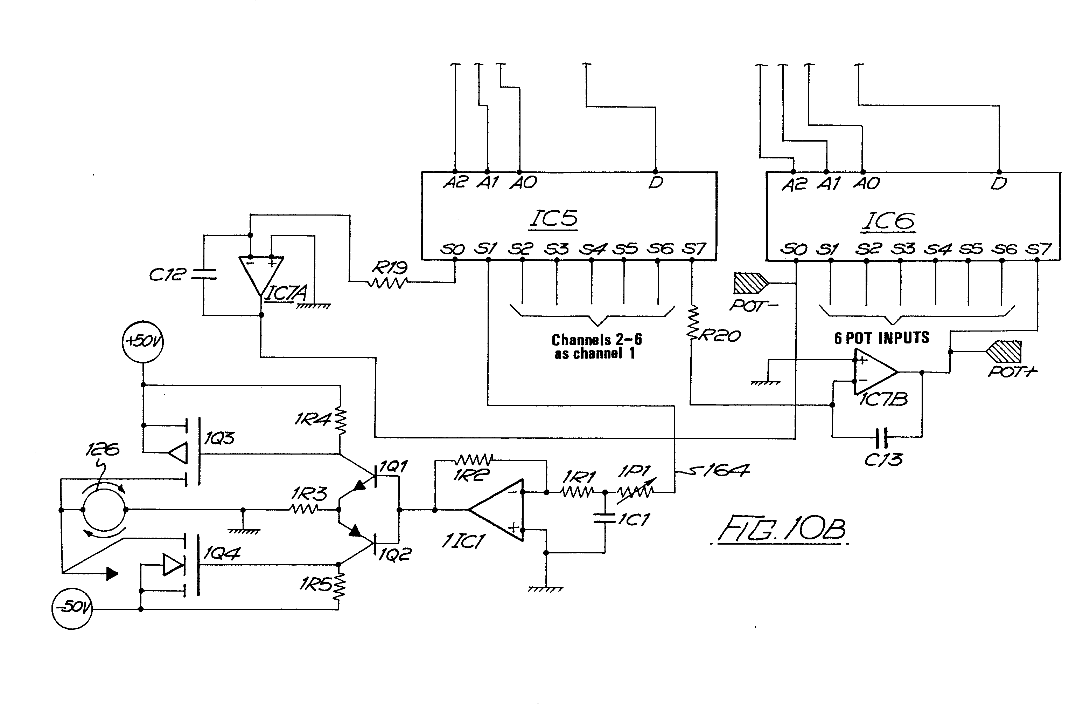

Referring now to Fig. 6, the control circuit comprises a transmitter 110 in which command signals resulting from the potentiometers such as potentiometers 66 to 72 are sourced, and the transmitter 110 incorporates circuitry for imposing a multiplexed form of the command signals on the power supply lines 74 to the receiver 112.

The receiver 112 divides the multiplexed signals from the power supply lines 74 which continue as lines 114 to servo amplifiers 116. The multiplexed signals are applied to a signal transformer 118 where they are converted into a pulse width modulated (PWM) stream and after transformation into the PWM stream, the multiplexed signal is compared in comparitor 120 with that from the position potentiometers 32 to 38 that are geared to the servo motors. Any discrepancy between the analogue of each command signal pulse and those of each feedback signal is converted into an error pulse whose sign and period is a function of the error. The resulting pulse train representing errors from each of the channels is de-multiplexed in a de-multiplexer 122, and after undergoing a period multiplying process in unit 124 to compensate for the foreshortend and multiplexed form, each signal is sent to its respective drive motor amplifier 116. The servo drive motors are illustrated in Fig. 6 by reference 126.

It is to be noted that most of the processing of the signals is undertaken while they are in multiplexed form. This has a clear advantage of economy of hardware, and it also means that whatever the electronic drift characteristics of the common elements, a similar drift will apply to all channels thus by using spare channels to establish motion related datums, these datums, whilst subject to drift in relation to their originally transmitted values, are referenced by similarly drifting motion control channels. It is therefore possible to arrange the servo control channels in a way that the drift is rejected. Specifically, electrical reference voltages corresponding to extremes of travel position datums are established by the adoption of two channels to determine the levels of voltage applied to the position feedback potentiometers 32 to 38.

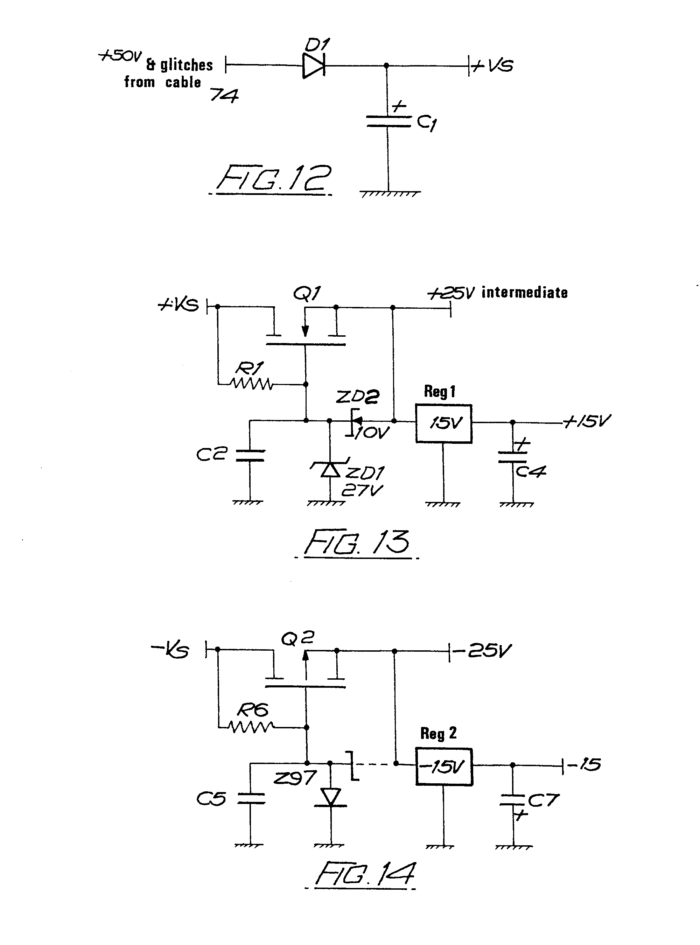

The command information from the potentiometers 66 to 72 is compiled on to one power supply line in the form of short duration voltage spikes, called herein "glitches" as shown at 128 in Fig. 7, and whilst the voltage excursions of these glitches may be between various predetermined limits, in the preferred arrangement negative voltage glitches are imposed on a normally positive DC power supply and extend down to the potential of an associated negative DC supply line.

The glitches are part of a sequential data stream and occur in pairs within predetermined regular time frames, and each time frame will be part of a regular cyclic data sequence.

A first of each pair of glitches of each time frame marks the start of that time frame whilst the position of the second glitch within the time frame is an analogue representation of the level of the command signal i.e. is an analogue representation of the voltage reading of the pointer of the associated potentiometer 66 to 72. The time frame count (which is caused to increment on the occurrance of the first and alternate glitches) within the sequence establishes the channel number whose input is being serviced.

The start or end of the sequence of time frames is identified by a unique event. In the present embodiment, the first eight time frames correspond to eight channel numbers. The data stream is thus composed of eight regularly spaced glitches (zero, two, four, etc. to fourteen) which mark the start of each time frame, and a further eight glitches (one, three, five, etc. to fifteen) which are variably spaced within their time frames, their positions determining the levels of the signals. The unique event may be achieved by imposing a glitch-free period (typically equal to at least one time frame and in the present embodiment equal to two time frames) at the end of the last (eighth) data-carrying time frame. Once this blank period is detected by the receiver, irrespective of the current incremental count, the data cycle is assumed to have ended and a subsequent glitch is taken to mark the start of the next data cycle. Thus, the multiplex signals are constantly being repeated.

Fig. 7 shows the form of the data sequence of one data cycle which contains eight analogue channels of data that are serially and repeatedly transmitted at approximately ten data cycles per second.

Ten time frames a, b, c ... k, are illustrated, frames j and k constituting the glitch-free period. The start of each time frame is established by a glitch (0, 2, 4, and so on) and within each time frame is a second glitch (1, 3, 5, and so on) the glitches being indicated by short vertical lines 128 extending downwardly from the voltage level indicated by reference 130.

The command information although provided by a human guided stylus with associated potentiometers may be synthesised conveniently using a computer or any other electronic device as may function from recorded media. Indeed the stylus 54 may be a self-tracking device, and instead of using the template aperture 56, the stylus movement may be controlled with the aid of a three dimensional television image of the remotely stationed cutter 16. The cutter 16 as explained herein is arranged to mimick the movement of the master unit 50.

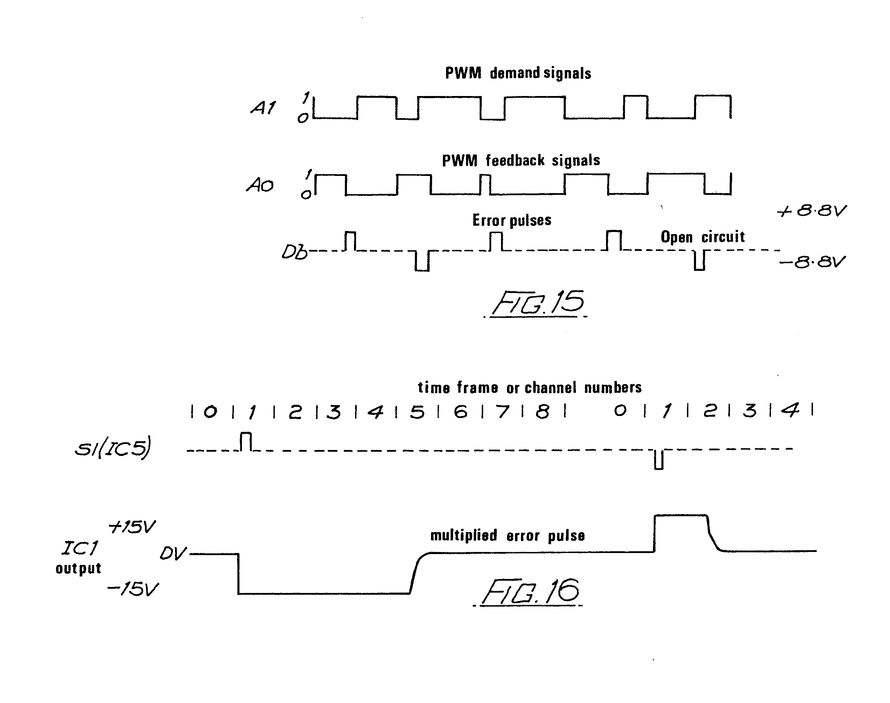

The transmitter 110 will now be explained in more detail in relation to Figs. 8, 8A and 9, and it should be mentioned that the transmitter will be embodied in the master unit 50 and will transmit its signals as explained through the cable 74.

As shown in Fig. 8 the transmitter is furnished with a number of voltage signals derived from the potentiometers 66, 68, 70 and 72 relative to the desired position of each axis of each degree of movement and also, for the purposes of drift annulment, the two voltage levels used energize the position potentiometers.

These voltage signals are multiplexed in multiplexer 132 in to a signal stream that in this embodiment is eight signals long as shown in Fig. 9, the whole of which is repeated at a 10 Hz data cycling rate.

This analogue signal stream is converted in a converting circuit 134 in to a PWM signal stream as shown in Fig. 9 appearing at the output 136 of the unit 134. A similar circuit is used in the receiver of the cutting apparatus 16.

An oscillator 136 sets the incremenet rate for a counter 138 which addresses the multiplexer at 132 causing it to scan the various input voltage signals from the position potentiometers 66 to 72. The multiplexer 132 presents these signals serially to the pulse width generator 134 which causes a proportion of the time frame associated to each channel (3.8 ms in this embodiment) to set logic low for an extent relating to the signal level, and the resulting output train of pulses at output 136 is as shown in Fig. 9.

Thus, a start of each time frame is regularly marked by a negative going edge whilst the data level is related to the time frames logic low portion concluded by a positive going edge. A counter 138 forces the output high for a duration of two times beyond the last data carrying time frame before resetting to repeat a data cycle.

Output 136 is connected to a mono stable circuit 140 which outputs a desending glitch on a normally high output at every edge. This results in the production of a signal of the form shown in Fig. 7 being transmitted down one of the supply lines of cable 74. To achieve this, an emitter follower circuit 142 as shown in Fig. 8A is used. The signal form of Fig. 7 appears on the output line 144 in Fig. 8A.

The circuit of the receiver 112 is shown in Fig. 10, and it will be noticed in this figure that there are a number of voltage application locations supplying respectively + 50 volts, + 15 volts, + 10 volts, + 8.8 volts, 0 volts - 8.8 volts, - 15 volts and - 50 volts. Fig. 11 shows how some of these voltages are derived

0218036

from the transmitter 110. The cable 74 is a three wire cable as shown in Fig. 11, the first wire 146 carrying a + 50 volts supply, the second wire 148 carrying a - 50 volts supply, and the third wire 150 being at 0 volts. At the receiver end, the wire 146 passes through a rectifier and filter unit 152 comprising a diode and capacitor circuit as shown in Fig. 12 to provide a + 50 volts output on line 154. From the unit 152 a further supply of + 15 volts is obtained by taking the 50 volts output through a voltage dropper and regulator unit 156 of the form shown in Fig. 12 which circuit also provides a coarse 25 volt supply suitable for regulation.

From the - 50 volt line 148 a - 15 volt regulated supply is achieved by taking the - 50 volt supply through a voltage dropper and regulator unit 156 which is similar in construction and operation to the circuit shown in Fig. 12, and in fact the circuit of unit 156 is shown in Fig. 13.

A line 158 is taken from the + 50 volts line 146 to a voltage sensing unit 160 to provide the glitch signal on the output line 162 thereof. The output line 162 is shown in Fig. 10.

Referring now in more detail to Fig. 10, the incoming glitch signal on line 162 is processed by the receiver circuit shown in Fig. 10 as follows. The resistors and diodes shown in Fig. 10 at the input of the receiver to between + 15 volts and 0 volts with the input normally high at + 15 volts but taken down to 0 volts by the glitches. The glitches trigger the timer 164 and a four bit counter 166. The timer 164 is however refreshed by trigger intervals of less than 1 time frame (3.8 ms) which cause the timer output to remain high. The timer thus only resets itself within the unglitched double frame of 20 ms (the timer period being set to 5.2 ms) that marks the end of each data cycle. Once reset, the next glitch sets the output high which causes a positive edge to be transmitted through C9 to the reset pin of the counter 166. Thus the counter 166 maintains a talley of the number of glitches in the data cycle from the second glitch onwards.

The output QO of counter 166 is in fact a reconstruction of the PWM demand signal created in the transmitter while the outputs Q1 to Q3 are used to address a demulitiplexer IC5 servicing the servo drives 126 and a multiplexer IC6 collating the feedback signals from the position potentiometers 32 to 36.

The main part of the receiver circuit is set to generate error pulses, and these error pulses are created in the following fashion. The QO output from the counter 166 (also referenced IC2A) and, according to the values of various error related perameters sets an analogue switch IC4 to output one of three states to the servo drives 126. These states in the example comprise the following; + 8.8 volts, open circuit, - 8.8 volts.

The switching is arranged so that in each time frame there will be created a pulse representing the error between the command signal as set by the input potentiometers 66 to 72, and the signal generated by the feedback potentiometers 32 to 38 indicating the actual servo motor position. The duration of each such pulse represents the magnitude of each control channel error whilst the sign indicates whether that error is positive or negative.

Switch IC4 is a dual four channel analogue switch whose input states A0 and A1 determine the connections made between the analogue inputs S0a to S3a to the output Da according to the following truth table.

| A1 | A0 | Switches connected to D |
|----|----|-------------------------|
| 0  | 0  | S0 |
| 0  | 1  | S1 |
| 1  | 0  | S2 |
| 1  | 1  | S3 |

Truth Table for IC4.

(Note Group A and B are insulated from each other but both operate according to the same truth table).

Also determined by the same logic are the connections made between the isolated B group of switches, S0b to S3b with Db.

In the present arrangement, group A services an integrator IC3A and group B is used to synthesize the control error pulse train with the + 8.8 volts, open circuit and - 8.8 volt states.

The integrator IC3A is set when S0a or S2a connect to Da when C10 may then discharge rapidly through R15. This occurs whenever the resetting unit IC2B is reset causing A1 of IC4 to go to logic 0. Following such a reset and taking the case when A0 = 1, the truth table shows that S1a (and S3a via the link) is connected to Da. This implements the integrating function of IC3A whose output runs downward from a starting value of + 7.5 volts. The output of IC3A continues downwards until it compares with the feedback signal voltage present at the non-inverting input of comparitor IC3B. Upon comparison, IC2B is reset i.e. A1 (IC4) = 0, causing the integrator to discharge.

Although the integrator may not be a perfect linear ramp generator, it operates over a restricted range of approximately + / - 7.5 volts within which its behaviour may be deemed linear for a satisfactory approximation.

Fig. 14 illustrates typical examples of pulse trains which appear at A1 and A0. The pulse train at A1 is the re-generated PWM command signal, whilst the signal appearing at A0 is the pulse width modulated feedback signal generated as described above.

The resulting error signal on Db is the difference in pulse widths between the two signals appearing at A1 and A0.

Following a negative edge on 0Q of IC2A, IC2B (in the absence of a reset) outputs Q0 = 1 causing A0 (IC4) = 1 whenever A1 moves low. The duration for which A0 remains high is established by the integrator IC3 and the potentiometer signal level set at the comparitor by the appropriate feedback potentiometer 32 to 38. Once the potentiometer exceeds the instantaneous integrator ramp voltage, IC2B is reset by the comparitor IC3B which in whenever A1 moves low. The duration remains high is established by the integrator IC3 and the potentiometer signal level set at the comparitor by the appropriate feedback potentiometer 32 to 38. Once the potentiometer exceeds the instantaneous integrator ramp voltage, IC2B is reset by the comparitor IC3B which in e + 8.8 volt pulse to the appropriate servo motor of the appropriate channel.

Therefore, it will be seen that a feedback signal which is accurately tracking the demand signal will cause A0 to change to low close to the time when A1 (or Q0 of

IC2A) changes from low. The width of the error pulse Db is then small.

In accordance with the timing diagram shown in Fig. 14, IC5 and IC6 address the current channel. In the present embodiment, channels 0 and 7 are used to determine the energisation voltage levels of the position feedback potentiometers 32 to 38 in order to compensate for the electronic drift whilst channels 1 to 6 are used to control the degrees of movement of the cutter.

In order to compensate for drift, the output pulses from S0 and S7 of demultiplexer IC5 contain positive or negative mean values depending upon whether the feedback voltages supplied to S0 and S7 of multiplexer IC6 exceed for fall short of the level determined by the data train. This is in turn determined at the transmitter using a circuit that mirrors the function of the multiplexer and the pulse width generator described in relation to Fig. 8. Thus, if there are departures from the ideal voltage levels, the same departures appear for all position potentiometer error pulses as for the servo drives. The potentiometer error control pulses are converted into a near steady voltage that is used to energize the potentiometers using the integrating circuitry shown in Fig. 10. The circuitry comprises integrators IC7A and IC7B which integrate the error pulses until such times as their output levels match those required. Once this is achieved, the error pulses diminish.

There is in principle no obstacle to assigning this drift compensation function to any pair of channels, but in the present embodiment it is found convenient to use channel 0 for the negative reference, and channel 7 for the positive reference.

The demultiplexed error pulses as shown in Fig. 14 sent to each servo motor 126 will have a time span between 0 and approximately 8.5 ms out of a data cycle that lasts for 100 ms. Given that a maximum practicable duty cycle of approximately 85% of a time frame (corresponding to a worst case error), each time frame occupies only 10% of the data cycle yielding a maximum overall duty cycle of only 8.5%.

To have reasonable effect driving a switching control amplifier, this low duty cycle must be extended by multiplication and in the present invention a circuit as shown in Fig. 10 is utilized to provide pulse width multiplication. The multiplied pulse can be applied to the appropriate servo motor whilst other multiplied pulses are being applied to other servo motors of the system, as long as any one multiplied pulse does not last for longer than a full data cycle.

The error pulses appear on the channels S1 to S6 of the demultiplexer IC5, and although only one output servo motor 126 is shown in Fig. 10, it will be appreciated that there is such a servo motor for each of the channels. An error pulse appearing for example on line 164 at output S1 of demultiplexer IC5 introduces a change in magnitude proportional to its time integral on 1C1 which, because of the high gain of amplifier 1IC1 drives it into saturation. The input impedance IR1 determines the duration of the charge level in IC1 that is sufficient to saturate 1IC1. A stretched and inverted error pulse is then used to drive the servo motor 126 by applying the stretched pulse to an emitter follower transistor pair IQ1 and IQ2 of which the bases are driven by the multiplied error pulses. The emitter followers of the transistor pair each drive load resistors IR4 and IR5 connected to the main power supply lines. The voltage drop across the load resistors appears across the gate and source of complementary power MOSFETs which connect through the servo motor 126.

In the arrangement described, the motor inductance is sufficient to avoid large ripple currents without the need for a separate choke and the power MOSFETs have the advantage of requiring no free wheeling diodes in contrast to bipolar devices. A novel feature of the circuit is the use of the resistor IR3 to restrict the base emitter current in the emitter follower pair.

It can be seen therefore that a control circuit is provided for the control of a number of channels in a servo system and in which a train of PWM signals are converted into glitch signals for transmission over substantial distances between the transmitter and receiver, the glitch signals being reconverted into PWM signals and compared with position feedback PWM signals in order to provide error signals for the driving of the servo motors.

Multiplexed data transmission and comparison are used and the essential switching function required for this is preserved throughout the whole circuit to effect the switching for the power servo amplifiers. Although the signals are always analogue in the arrangement described, they are variously quantified in the voltage and time lapse domains and are combined to effect the servo error signal in the form of assigned packets of virtual energy. Such packets, following both voltage and duration amplification, directly drive the servo motors.

The disclosed arrangement has a number of novel and individually inventive features including but not limited to the following.

The signal composition has large magnitude glitches timed to correspond to each positive and negative going edge of a multiplexed PWM wave form.

Multiplexed PWM data signals are used in integration comparison with multiplex voltage feedback signals in order to derive a multiplexed error signal whose pulse width is an analogue of the error.

There is provided a drift compensation principle treating the feedback transducer reference voltage levels as any other channel in the system.

A novel error pulse width multiplication circuit is provided.

A novel configuration of switch mode power amplifier is provided.

The embodiment of one or more of the above features within a single or multi-channel servo control system is novel.

The embodiment described lends itself readily to any application involving multi-channel remote servo control, and whilst the medium transmitting the control signals is presently one of wires 146, 148 and 150, that also transmit power to the drives, the data link could take various other forms including optical, fibre-optical, free air, sonic, ultra-sonic, pressure wave, radio, or electric signal wire, by the use of only relatively minor interface modifications.

Compared to other known servo systems, the arrangement described as a number of advantages including the following:

1. Ecomony of data transmission. The data are imposed on one of the power supply lines thus eliminating the need for separate data carrying wires.

2. Economy of components. Most of the processing circuitry operates on multiplex form of command and feedback signals. The hardware specific to each channel can be made simple and generally relates to the motor power drive stages.

3. Compensation against drift. The multiplexed processing components share in the establishment of reference voltages which are used in the form in relation of these servo drive signals. A high positional accuracy may thus be expected irrespective of temperature and ageing effects.

4. Reliability. The low component count, conservative timing sequences and conservative electrical ratings employed in the design may be expected to yield a high reliability and insensitivity to electrical noise.

CLAIMS

1. A control circuit, for example for a servo system, comprising:

a) input mens providing a plurality of pulse width modulated (PWM) input signals;

b) input conversion means converting the leading and trailing edges of the PWM signals into voltage glitches;

c) power supply lines along which the voltage glitches are passed;

d) output means receiving said glitches;

e) output conversion means converting said glitches into PWM output signals, which signals can be used to drive for example respective servo motors of a servo system.

2. A control circuit accordingto Claim 1, wherein the supply lines comprise three lines carrying a positive voltage, zero vltate and a negative voltage, said glitches being supplied on the positive or negative lines and being voltage spikes lowering the positive voltage or raising the negative voltage.

3. A control circuit according to claim 1, wherein the input means comprises respective input potentiometers providing input analogue signals corresponding to the potentiometer positions, an input multiplexer for providing said input analague signals cyclically at the output of said multiplexer, which output is connected to said input conversion means.

4. A control circuit according to claim 1, 2 or 3, wherein said output means comprises a demultiplexer connected to the output of the output conversion means recreating the input PWM signals which may be applied for example to servo motors.

5. A control circuit according to claim 4, including servo motors to be driven by said recreated input signals, output or position potentiometers connected to said servo motors providing analogue feedback signals, and comparitor means comparing the feedback signals with integrated voltages to provide PWM feedback signals compared with the recreated input signals to provide error which are used accurately to position the servo motors.

6. A control circuit according to claim 5, wherein the error signals are positive or negative pulses depending upon the sign of the error.

7. A control circuit according to claim 6, including a pulse stretching circuit for each servo motor, which pulse stretching circuit stretches the error pulses which are applied to the serve motors.

8. A control circuit according to claim 5, 6, or 7, including a drift compensation means for compensating for drift of voltage reference of said feedback potentiometers compared to the reference voltages of the input potentiometer.

9. A cutter assembly comprising a master unit including a stylus adapted to be moved in a predetermined path, means mounting the stylus for movement in a plurality of degrees of movement, a cutter device comprising a cutting head having a cutting bit, means mounting the cutting head for movement in a plurality of degrees of movement corresponding to the plurality of degrees of movement of the stylus, whereby the cutter bit can move in the same predetermined path but at a location remote from the master unit, servo motors in said cutter device for moving the cutting head respectively in said degrees of movement and a control circuit according to claim 1, wherein the input means is connected to said master unit whereby the movement of the stylus produces said PWM input signals and the output means is connected to the cutter device and the transmitted signals are used to move the cutter bit in the same fashion as the stylus is moved.

10.   A control circuit comprising:

a) means creating a plurality of individusal analogue signals;

b) a multiplexer causing said signals to be outputted in a sequential stream and repeatedly;

c) a pulse width modulated circuit to which the sequential stream is supplied;

d) an output from the pulse width modulated circuit providing a stream of PWM pulses corresponding to said individual signals, the pulse width of each pulse being a representation of the value of corresponding analogue signal, and

e) a glitch creating circuit connected to the output of the PWM circuit and creating output glitches corresponding to the leading and trailing edges of said PWM pulses.

11. A control circuit according to claim 10, including:

f) output lines coupled to the output of said glitch creating circuits and along which said glitches are supplied along with a power supply;

g) a receiver circuit connected to the output end of said output lines, said receiver circuit comprising:-

i) a circuit for recreating the PWM pulses from said glitches,

ii) servo devices whose positions respectively are to be controlled by said analogue signals,

iii) means creating a stream of reference PWM pulses corresponding to the instantaneous positions of the servo devides,

iv) comparitor means for comparing the recreated PWM pulses with the reference PWM pulses to produce error pulses, and

v) drive circuit means coupling the error pulses to the servo devices for altering the positions of the servo devices as determined by the error pulses.

0218036

FIG.1

FIG.2

FIG.3

FIG.4

2/8

0218036

_FIG. 5_

**TRANSMITTING STATION**

| SIGNAL SOURCES | POWER SUPPLY |

110

| SIGNAL COMBINATION AND TRANSFORMATION | → | COMMAND SIGNALS IMPOSED ON POWER LINES |

74

_FIG. 6_

**RECEIVER**

118

SIGNAL TRANSFORMATION ← SIGNALS SEPARATED FROM POWER

114

POWER LINES TO SERVO AMPLIFIERS

CONVARATOR

120

122

Error Signal

DEMULTIPLEXER

124

124

PULSE WIDTH MULTIPLIER

FEEDBACK SIGNAL COMBINATION

116

AMPLIFIER

POTENTIOMETER DATUMS AND POSITIONAL FEEDBACK

116

126

126

DRIVE MOTOR

126

32

36

34

126

POSITION FEEDBACK

## TIME FRAMES

*FIG.7*

HAND GUIDED REPLICA OF
REMOTE MACHINE TOOL

Up to 6 channels of position data
+ 2 channels for potentiometer
energisation levels

*FIG.8*

OSCILLATOR

COUNTER — Addresses — MULTIPLEXER

PULSE WIDTH GENERATOR

FLIP FLOP — RS — RAMP GENERATOR

POWER SUPPLY LINES

MONOSTABLE

CLK / CLK — Q — GLITCH DRIVER

+50V

140 ～ CLK / CLK    Q    142    144

-50V supply with -50V data glitches

Monostable

-50V

*FIG.8A*

Channel 0  Channel 1  Channel 2  Channel 3  Channel 4  Channel 5  Channel 6  Channel 7    Channel 0

0'  2'  4'  6'  8'  10'  12'  14'    0'  2'

logic 1
logic 0

1    3    5  7    9    11    13    15

*FIG.9*

-50V to power stage

+50V, 0V,-50V plus glitches    148

0V to power stage

*FIG.11*

152

Rectifier & filter    +50V to power stage

Voltage dropper & regulator    +15V regulated

Voltage dropper & regulator    -15V regulated

0V to signal logic

Voltage sensing clamps    glitch signal

FIG. 10A

5/8

02.18036

FIG.10B

7/8

FIG.12

FIG. 13

FIG. 14

0218036

**PWM demand signals**

A1 $\begin{smallmatrix}1\\0\end{smallmatrix}$ 

**PWM feedback signals**

Ao $\begin{smallmatrix}1\\0\end{smallmatrix}$

$+8.8V$

**Error pulses**

Db — — — — **Open circuit**

$-8.8V$

*FIG.15*

**time frame or channel numbers**

| 0 | 1 | 2 | 3 | 4 | 5 | 6 | 7 | 8 |   0 | 1 | 2 | 3 | 4 |

S1(IC5)

IC1 output  $+15V$   $DV$   $-15V$   **multiplied error pulse**

*FIG.16*

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.⁴) |
|---|---|---|---|
| Y | EP-A-0 157 191  (BERKELEY)<br>* Whole document *<br>--- | 1-4 | G 05 B  19/403 |
| Y | EP-A-0 180 669  (PNEUMO)<br>* Whole document *<br>--- | 1-4 | |
| Y | EP-A-0 177 060  (HITACHI)<br>* Whole document *<br>--- | 1-4 | |
| Y | US-A-4 138 632  (PNEUMO)<br>* Whole document *<br>--- | 1-4 | |
| A | IEEE TRANSACTIONS ON INDUSTRY APPLICATIONS, vol. IA-20, no. 6, November/December 1984, pages 1532-1540, IEEE, New York, US; J. SVAROVSKY et al.: "Increase in servo gain reduces jitter in high-performance numerical control"<br>* Pages 1532-1540 *<br>----- | 1-4 | TECHNICAL FIELDS SEARCHED (Int. Cl.⁴)<br><br>G 05 B<br>B 25 J |

The present search report has been drawn up for all claims

| Place of search | Date of completion of the search | Examiner |
|---|---|---|
| THE HAGUE | 03-12-1986 | RESSENAAR J.P. |